# EUROPEAN PATENT APPLICATION

(11) **EP 4 503 760 A1**
(43) Date of publication of application: **05.02.2025**
(21) Application number: 22932759.8
(22) Date of filing: 25.03.2022
(51) Int. Cl.: H04W 52/02, H04W 72/04, H04W 68/00

(54) **METHOD AND APPARATUS FOR TRANSMITTING PAGING DOWNLINK CONTROL INFORMATION AND STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2022/083193
(87) International publication number: WO 2023/178698

(57) **Abstract**

The present disclosure provides a method and apparatus for receiving and monitoring paging downlink control information (DCI) and a storage medium, applied to a wireless communication technology. The method comprises: receiving a wake-up signal corresponding to a user equipment; determining, according to a time-domain position for receiving the wake-up signal, a time-domain position of a monitoring occasion for monitoring the paging DCI; and monitoring the paging DCI corresponding to the user equipment at the time-domain position of the monitoring occasion for monitoring the paging DCI. In the present disclosure, the user equipment determines, according to the time-domain position for receiving the wake-up signal, the time-domain position of the monitoring occasion for monitoring the paging DCI, so that when the paging DCI is not sent periodically because of the use of the wake-up signal, the time-domain position of the monitoring occasion for monitoring the paging DCI can be accurately determined, and the paging DCI can be received in time.

## Description

### TECHNICAL FIELD

The present disclosure relates to wireless communication technologies, and in particular, to a method and apparatus for transmitting and monitoring paging downlink control information, and a storage medium.

### BACKGROUND

In some wireless communication technologies, a wake-up signal (WUS) may be used to indicate to wake up a user equipment (UE) to transition from a sleep state to a working state.

In a scenario of using the WUS, a new paging mechanism may be introduced. In the new paging mechanism, the concept of the paging period is not emphasized, and it is not limited to that paging downlink control information (DCI) is sent on a corresponding paging frame (PF) / paging occasion (PO) of the user equipment, but the paging DCI may be sent by the network device according to the use requirements of the user equipment. Therefore, how to determine the monitoring occasion of the paging DCI is a problem to be solved.

### SUMMARY

According to the present disclosure, there is provided a method and apparatus for monitoring paging downlink control information, a device, and a storage medium.

According to a first aspect, there is provided a method for monitoring paging downlink control information, performed by a user equipment, where the method includes:
receiving a wake-up signal corresponding to the user equipment;
determining a time domain position of a monitoring occasion for monitoring paging DCI according to a time domain position for receiving the wake-up signal; and
monitoring paging DCI corresponding to the user equipment at the time domain position of the monitoring occasion for monitoring the paging DCI.

In the method, the user equipment determines the time domain position of the monitoring occasion for monitoring the paging DCI according to the time domain position for receiving the wake-up signal. In a case that the paging DCI is not periodically sent due to use of the wake-up signal, the user equipment may accurately determine the time domain position of the monitoring occasion for monitoring the paging DCI, and receive the paging DCI in time.

In some possible implementations, a monitoring occasion of the wake-up signal corresponding to the user equipment is periodically distributed in a time domain.

In some possible implementations, the time domain position of the monitoring occasion for monitoring the paging DCI is after a first moment, and the first moment is a moment corresponding to a first time interval behind an end position of the time domain position for receiving the wake-up signal.

In some possible implementations, the time domain position of the monitoring occasion for monitoring the paging DCI is before a second moment, and the second moment is a moment corresponding to a second time interval behind an end position of the time domain position for receiving the wake-up signal.

In some possible implementations, a period of a paging search space for transmitting the paging DCI includes M * N monitoring occasions, where M is a quantity of SSBs actually sent by a network device, and N is an integer greater than zero.

In some possible implementations, the monitoring occasion for monitoring the paging DCI at least includes M * H monitoring occasions after the first moment and closest to the first moment in a paging search space for transmitting the paging DCI, where M is a quantity of SSBs actually sent by a network device, and H is an integer greater than zero.

In some possible implementations, the monitoring occasion for monitoring the paging DCI at least includes M * H monitoring occasions in one or more paging search space periods after the first moment and closest to the first moment in a paging search space for transmitting the paging DCI, a start time of the paging search space period is later than the first moment, M is a quantity of SSBs actually sent by a network device, and H is an integer greater than zero.

In some possible implementations, in response to a period of a paging search space including M * N monitoring occasions, His N.

In some possible implementations, the monitoring occasion for monitoring the paging DCI at least includes all paging occasions in a paging search space period after the first moment and closest to the first moment in a paging search space for transmitting the paging DCI, and a start time of the paging search space period is later than the first moment.

In some possible implementations, receiving configuration information sent by the network device, where the configuration information indicates a paging search space for transmitting the paging DCI.

In some possible implementations, at least M monitoring occasions for monitoring the paging DCI are provided between the first moment and the second moment, where M is a quantity of SSBs actually sent by a network device.

In some possible implementations, an interval between the first moment and the second moment is greater than or equal to a duration of a paging search space period.

In some possible implementations, the monitoring occasion for monitoring the paging DCI includes at least one monitoring occasion in S paging search space periods after the first moment, where S is an integer greater than or equal to 1.

In some possible implementations, the monitoring occasion for monitoring the paging DCI includes at least one monitoring occasion in S paging search space periods before the second moment, where S is an integer greater than or equal to 1.

In some possible implementations, the method further includes:
reporting capability information to a network device, where the capability information is used to indicate at least one of the first time interval or the second time interval.

According to a second aspect, there is provided a method for monitoring paging downlink control information, performed by a network device, where the method includes:
sending a wake-up signal corresponding to a user equipment to the user equipment;
determining a time domain position of a monitoring occasion for sending paging DCI according to a time domain position for sending the wake-up signal; and
sending paging DCI corresponding to the user equipment at the time domain position of the monitoring occasion for monitoring the paging DCI.

In the method, the network device determines the time domain position of the monitoring occasion for monitoring the paging DCI according to the time domain position for receiving the wake-up signal. In a case that the paging DCI is not periodically sent due to use of the wake-up signal, the network device may accurately determine the time domain position of the monitoring occasion for sending the paging DCI, so that the user equipment receives the paging DCI in time.

In some possible implementations, a monitoring occasion of the wake-up signal corresponding to the user equipment is periodically distributed in a time domain.

In some possible implementations, the time domain position of the monitoring occasion for monitoring the paging DCI is after a first moment, and the first moment is a moment corresponding to a first time interval behind an end position of the time domain position for sending the wake-up signal.

In some possible implementations, the time domain position of the monitoring occasion for monitoring the paging DCI is before a second moment, and the second moment is a moment corresponding to a second time interval behind an end position of the time domain position for receiving the wake-up signal.

In some possible implementations, a period of a paging search space for transmitting the paging DCI includes M * N monitoring occasions, where M is a quantity of SSBs actually sent by the network device, and N is an integer greater than zero.

In some possible implementations, the monitoring occasion for monitoring the paging DCI at least includes M * H monitoring occasions after the first moment and closest to the first moment in a paging search space for transmitting the paging DCI, where H is an integer greater than zero.

In some possible implementations, the monitoring occasion for monitoring the paging DCI at least includes M * H monitoring occasions in one or more paging search space periods after the first moment and closest to the first moment in a paging search space for transmitting the paging DCI, a start time of the paging search space period is later than the first moment, M is a quantity of SSBs actually sent by the network device, and H is an integer greater than zero.

In some possible implementations, in response to a period of a paging search space for transmitting the paging DCI includes M * N monitoring occasions, H is N.

In some possible implementations, the monitoring occasion for monitoring the paging DCI at least includes all paging occasions in a paging search space period after the first moment and closest to the first moment in a paging search space for transmitting the paging DCI, and a start time of the paging search space period is later than the first moment.

In some possible implementations, sending configuration information to the user equipment, where the configuration information indicates a paging search space for transmitting the paging DCI.

In some possible implementations, at least M monitoring occasions for monitoring the paging DCI are provided between the first moment and the second moment, where M is a quantity of SSBs actually sent by the network device.

In some possible implementations, an interval between the first moment and the second moment is greater than or equal to a duration of a paging search space period.

In some possible implementations, the monitoring occasion for monitoring the paging DCI includes at least one monitoring occasion in S paging search space periods after the first moment, where S is an integer greater than or equal to 1.

In some possible implementations, the monitoring occasion for monitoring the paging DCI includes at least one monitoring occasion in S paging search space periods before the second moment, where S is an integer greater than or equal to 1.

In some possible implementations, receiving capability information reported by the user equipment, where the capability information is used to indicate at least one of the first time interval and the second time interval.

According to a third aspect, there is provided a communication apparatus. The communication apparatus may be configured to perform the steps performed by the user equipment in the first aspect or any possible design of the first aspect. The user equipment may implement the functions in the various methods by using a form of a hardware structure, a software module, or a hardware structure plus a software module.

When the communication apparatus shown in the first aspect is implemented by using the software module, the communication apparatus may include a transceiving module and a processing module.

The transceiving module is configured to receive a wake-up signal corresponding to the user equipment.

The processing module is configured to determine a time domain position of a monitoring occasion for monitoring paging DCI according to a time domain position for receiving the wake-up signal.

The transceiving module is further configured to monitor paging DCI corresponding to the user equipment at the time domain position of the monitoring occasion for monitoring the paging DCI.

According to a fourth aspect, there is provided a communication apparatus. The communication apparatus may be configured to perform the steps performed by the user equipment in the second aspect or any possible design of the second aspect. The user equipment may implement the functions in the various methods by using a form of a hardware structure, a software module, or a hardware structure plus a software module.

When the communication apparatus shown in the second aspect is implemented by using the software module, the communication apparatus may include a transceiving module and a processing module.

The transceiving module is configured to send a wake-up signal corresponding to a user equipment to the user equipment.

The processing module is configured to determine a time domain position of a monitoring occasion for sending paging DCI according to a time domain position for sending the wake-up signal.

The transceiving module is further configured to send paging DCI corresponding to the user equipment at the time domain position of the monitoring occasion for monitoring the paging DCI.

According to a fifth aspect, there is provided a communication apparatus, including a processor and a memory, where the memory is configured to store a computer program, and the processor is configured to execute the computer program to implement the first aspect or any possible design of the first aspect.

According to a sixth aspect, there is provided a communication apparatus, including a processor and a memory, where the memory is configured to store a computer program, and the processor is configured to execute the computer program to implement the second aspect or any possible design of the second aspect.

According to a seventh aspect, there is provided a computer-readable storage medium, where the computer-readable storage medium stores an instruction (or referred to as a computer program, a program), and when the instruction is invoked and executed on a computer, the computer is enabled to perform the first aspect or any possible design of the first aspect.

According to an eighth aspect, there is provided a computer-readable storage medium, where the computer-readable storage medium stores an instruction (or referred to as a computer program, a program), and when the instruction is invoked and executed on a computer, the computer is enabled to perform the second aspect or any possible design of the second aspect.

It is to be understood that both the foregoing general description and the following detailed description are exemplary and explanatory only and are not restrictive of the disclosure.

### BRIEF DESCRIPTION OF THE DRAWINGS

The accompanying drawings described here are used to provide a further understanding of the embodiments of the present disclosure and constitute a part of the present disclosure. The illustrative embodiments of the embodiments of the present disclosure and the description of them are used to explain the embodiments of the present disclosure, and do not constitute an improper limitation on the embodiments of the present disclosure. In the drawings:

The accompanying drawings, which are incorporated in and constitute a part of the specification, illustrate embodiments consistent with the embodiments of the present disclosure and, together with the description, serve to explain the principles of the embodiments of the present disclosure.
FIG. 1 is a schematic architectural diagram of a wireless communication system according to an embodiment of the present disclosure;
FIG. 2 is a schematic diagram of a method for transmitting paging downlink control information according to an example embodiment;
FIG. 3 is a flowchart of a method for transmitting paging downlink control information according to an example embodiment;
FIG. 4 is a flowchart of a method for monitoring paging downlink control information according to an example embodiment;
FIG. 5 is a flowchart of a method for monitoring paging downlink control information according to an example embodiment;
FIG. 6 is a structural diagram of an apparatus for monitoring paging downlink control information according to an example embodiment;
FIG. 7 is a structural diagram of an apparatus for monitoring paging downlink control information according to an example embodiment;
FIG. 8 is a structural diagram of an apparatus for sending paging downlink control information according to an example embodiment;
FIG. 9 is a structural diagram of an apparatus for sending paging downlink control information according to an example embodiment.

### DETAILED DESCRIPTION

The embodiments of the present disclosure are further described with reference to the accompanying drawings and specific embodiments.

Example embodiments will be described in detail here, examples of which are illustrated in the accompanying drawings. The following description refers to the accompanying drawings in which the same numbers in different drawings represent the same or similar elements unless otherwise represented. The implementations described in the following example embodiments do not represent all implementations consistent with the embodiments of the present disclosure. By contrast, they are merely examples of apparatuses and methods consistent with some aspects of the present disclosure as detailed in the appended claims.

Terms used in the embodiments of the present disclosure are merely for the purpose of describing particular embodiments, and are not intended to limit the embodiments of the present disclosure. The singular forms "a" and "the" used in the embodiments of the present disclosure and the appended claims are also intended to include plural forms, unless the context clearly indicates other meanings. It should also be understood that the term "and/or" as used here refers to and includes any or all possible combinations of one or more associated listed items.

It should be understood that although the terms first, second, third, or the like, may be used in the embodiments of the present disclosure to describe various information, these information should not be limited to these terms. These terms are only used to distinguish the same type of information from each other. For example, without departing from the scope of the embodiments of the present disclosure, the first information may also be referred to as second information, and similarly, the second information may also be referred to as first information. Depending on the context, the words "if" and "in case" as used here may be interpreted as "at the time" or "when" or "in response to determining".

Embodiments of the present disclosure are described in detail below, and examples of the embodiments are shown in the accompanying drawings, in which the same or similar reference numerals refer to the same or similar elements throughout. The embodiments described below with reference to the drawings are exemplary and are intended to explain the present disclosure and are not to be construed as limitations of the present disclosure.

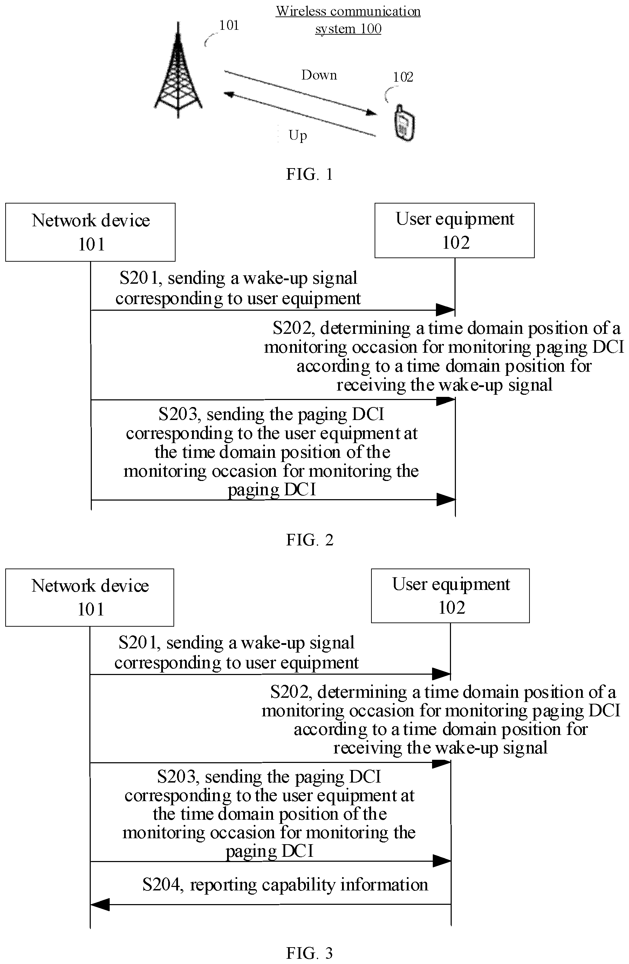

As shown in FIG. 1, the method for transmitting capability information provided by an embodiment of the present disclosure may be applied to a wireless communication system 100, where the wireless communication system may include, but is not limited to, a network device 101 and a user equipment 102. The user equipment 102 is configured to support carrier aggregation, and the user equipment 102 may be connected to a plurality of carrier units of the network device 101, including a primary carrier unit and one or more secondary carrier units.

It should be understood that the foregoing wireless communication system 100 may be applied to a low-frequency scenario or a high-frequency scenario. The application scenario of the wireless communication system 100 includes but is not limited to a long term evolution (LTE) system, an LTE frequency division duplex (FDD) system, an LTE time division duplex (TDD) system, a worldwide interoperability for micro wave access (WiMAX) communication system, a cloud radio access network (CRAN) system, a future 5-th generation (5G) system, a new radio (NR) communication system, or a future evolved public land mobile network (PLMN) system, or the like.

The user equipment 102 shown above may be a user equipment (UE), a terminal, an access terminal, a terminal unit, a terminal station, a mobile station (MS), a remote station, a remote terminal, a mobile terminal, a wireless communication device, a terminal agent, a user equipment, or the like. The user equipment 102 may have a wireless transceiving function, and may perform communication (for example, wireless communication) with one or more network devices 101 of one or more communication systems, and accept a network service provided by the network device 101, where the network device 101 includes but is not limited to the illustrated base station.

Among them, the user equipment 102 may be a cellular telephone, a cordless telephone, a session initiation protocol (SIP) phone, a wireless local loop (WLL) station, a personal digital assistant (PDA) device, a handheld device having a wireless communication function, a computing device, or another processing device connected to a wireless modem, a vehicle-mounted device, a wearable device, a user equipment in a future 5G network, or a user equipment in a future evolved PLMN network, etc.

The network device 101 may be an access network device (or referred to as an access network station). Among them, the access network device refers to a device that provides a network access function, for example, a radio access network (RAN) base station, etc. The network device may specifically include a base station (BS) device, or include a base station device and a radio resource management device configured to control the base station device, etc. The network device may further include a relay station (a relay device), an access point, a base station in a future 5G network, a base station in a future evolved PLMN network, an NR base station, etc. The network device may be a wearable device or a vehicle-mounted device. The network device may also be a communication chip having a communication module.

For example, the network device 101 includes but is not limited to: a gnodeB (gNB) in a 5G, an evolved node B (eNB) in a LTE system, a radio network controller (RNC), a node B (NB) in a WCDMA system, a wireless controller in a CRAN system, a base station controller (BSC), a base transceiver station (BTS) in a GSM system or a CDMA system, a home base station, such as a home evolved nodeB, or a home node B (HNB), a baseband unit (BBU), a transmitting and receiving point (TRP), a transmitting point (TP), or mobile switching center, etc.

The wake-up signal in the present disclosure may be a normal wake-up signal or a low-power-consumption wake-up signal. In some examples, the full name of the low-power-consumption wake-up signal may be referred to as low-power WUS.

The low-power-consumption wake-up signal is different from the normal wake-up signal in R 17. The low-power-consumption wake-up signal may correspond to a separate receiver, which may be referred to as a secondary transceiver, and the power consumption of the secondary receiver is much lower than the power consumption of a main receiver. The user equipment receives the low-power-consumption wake-up signal by using the low-power-consumption secondary receiver, and processes the uplink data and the downlink data by using the main transceiver. The normal wake-up signal needs to be received by the main transceiver.

According to an embodiment of the present disclosure, there is provided a method for transmitting paging downlink control information. FIG. 2 is a flowchart of a method for monitoring paging downlink control information according to an example embodiment. As shown in FIG. 2, the method includes following steps.

In step S201, the network device sends a wake-up signal corresponding to the user equipment to the user equipment.

In step S202, the user equipment determines a time domain position of a monitoring occasion for monitoring the paging DCI according to a time domain position for receiving the wake-up signal.

In step S203, the user equipment monitors the paging DCI corresponding to the user equipment at the time domain position of the monitoring occasion for monitoring the paging DCI.

In some possible implementations, the monitoring occasion of the wake-up signal corresponding to the user equipment is periodically distributed in the time domain, so that the user equipment periodically detects the monitoring occasion of the corresponding wake-up signal.

In some possible implementations, the time domain position of the monitoring occasion for monitoring the paging DCI is after the first moment t1. The first moment t1 is a moment corresponding to a first time interval T1 behind the end position of the time domain position for receiving the wake-up signal.

Alternatively, the time domain position of the monitoring occasion for monitoring the paging DCI is after a third moment t3. The third moment t3 is a moment corresponding to the first time interval T1 behind the start position of the time domain position for receiving the wake-up signal. Among them, the duration of the interval between the third moment t3 and the first moment t1 is the length of the monitoring occasion of the wake-up signal corresponding to the user equipment.

Among them, the first time interval T1 is determined by a protocol, or the first time interval T1 may be determined according to a protocol agreement.

By setting the first time interval T1, a processing time is reserved for the user equipment to switch from receiving the wake-up signal to receiving the paging DCI.

In some possible implementations, the time domain position of the monitoring occasion for monitoring the paging DCI is before the second moment t2. The second moment t2 is a moment corresponding to a second time interval T2 behind the end position of the time domain position for receiving the wake-up signal.

Alternatively, the time domain position of the monitoring occasion for monitoring the paging DCI is before a fourth moment t4. The fourth moment t4 is a moment corresponding to the second time interval T2 behind the start position of the time domain position for receiving the wake-up signal. Among them, the duration of the interval between the fourth moment t4 and the second moment t2 is the length of the monitoring occasion of the wake-up signal corresponding to the user equipment.

Among them, the second time interval T2 is determined by a protocol, or the second time interval T2 may be determined according to a protocol agreement.

By setting the second time interval T2, the user equipment is prevented from monitoring for a long time when the monitoring occasion for monitoring the paging DCI is not detected, so as to save the power consumption of the user equipment.

In some possible implementations, the time domain position of the monitoring occasion for monitoring the paging DCI is after the first moment t1 and before the second moment t2. The first moment t1 is a moment corresponding to the first time interval T1 behind the end position of the time domain position for receiving the wake-up signal, and the second moment t2 is a moment corresponding to the second time interval T2 behind the end position of the time domain position for receiving the wake-up signal.

By setting the first time interval T1 and the second time interval T2, a processing time may be reserved for the user equipment to switch from receiving the wake-up signal to receiving the paging DCI. In addition, the user equipment may be prevented from monitoring for a long time when the monitoring occasion for monitoring the paging DCI is not detected, so as to save the power consumption of the user equipment.

In some possible implementations, the monitoring occasion for monitoring the paging DCI satisfies one of the following manners.

In manner 1, the monitoring occasion for monitoring the paging DCI at least includes M * H monitoring occasions after the first moment and closest to the first moment in the paging search space for transmitting the paging DCI, where M is the quantity of SSBs actually sent by the network device, and H is an integer greater than zero.

In an example, the monitoring occasion for monitoring the paging DCI only includes M * H monitoring occasions after the first moment and closest to the first moment in the paging search space for transmitting the paging DCI, so as to ensure that the operation of starting to monitor the paging DCI is later than the first moment.

In manner 2, the monitoring occasion for monitoring the paging DCI at least includes M * H monitoring occasions in one or more paging search space periods after the first moment and closest to the first moment in the paging search space for transmitting the paging DCI, where the start time of the paging search space period is later than the first moment, M is the quantity of SSBs actually sent by the network device, and H is an integer greater than zero. Among them, the paging search space period is a period corresponding to the paging search space for transmitting the paging DCI. Among them, the period of the paging search space may refer to a search space periodicity, which indicates a time interval between two adjacent paging search spaces.

In an example, when M * N monitoring occasions are included in a period of the paging search space, N is an integer greater than zero, and the value of H is the same as a value of N.

In an example, the monitoring occasion for monitoring the paging DCI only includes M * H monitoring occasions in a paging search space period after the first moment and closest to the first moment in the paging search space for transmitting the paging DCI, so as to ensure that the operation of starting to monitor the paging DCI is later than the first moment.

In manner 3, the monitoring occasion for monitoring the paging DCI at least includes all paging occasions in a paging search space period after the first moment and closest to the first moment in the paging search space for transmitting the paging DCI, and the start time of the paging search space period is later than the first moment.

In an example, the monitoring occasion for monitoring the paging DCI only includes all paging occasions in a paging search space period after the first moment and closest to the first moment in the paging search space for transmitting the paging DCI, and the start time of the paging search space period is later than the first moment.

In some possible implementations, the monitoring occasion for monitoring the paging DCI satisfies one of the following manners.

In manner 1, the monitoring occasion for monitoring the paging DCI at least includes M * H monitoring occasions before the second moment and closest to the second moment in the paging search space for transmitting the paging DCI, where M is the quantity of SSBs actually sent by the network device, and H is an integer greater than zero.

In an example, the monitoring occasion for monitoring the paging DCI only includes M * H monitoring occasions before the second moment and closest to the second moment in the paging search space for transmitting the paging DCI.

In manner 2, the monitoring occasion for monitoring the paging DCI at least includes M * H monitoring occasions in one or more paging search space periods before the second moment and closest to the second moment in the paging search space for transmitting the paging DCI, where the end time of the paging search space period is earlier than the second moment, M is the quantity of SSBs actually sent by the network device, and H is an integer greater than zero. Among them, the paging search space period is a period corresponding to the paging search space for transmitting the paging DCI.

In an example, when M * N monitoring occasions are included in a period of the paging search space, N is an integer greater than zero, and the value of H is the same as the value of N.

In an example, the monitoring occasion for monitoring the paging DCI only includes M * H monitoring occasions in a paging search space period before the second moment and closest to the second moment in the paging search space for transmitting the paging DCI.

In manner 3, the monitoring occasion for monitoring the paging DCI at least includes all paging occasions in a paging search space period before the second moment and closest to the second moment in the paging search space for transmitting the paging DCI, and the end time of the paging search space period is later than the second moment.

In an example, the monitoring occasion for monitoring the paging DCI only includes all paging occasions in a paging search space period before the second moment and closest to the second moment in the paging search space for transmitting the paging DCI, and the start time of the paging search space period is later than the second moment.

In some possible implementations, a period of the paging search space for transmitting the paging DCI includes M * N monitoring occasions, where M is the quantity of SSBs actually sent by the network device, and N is an integer greater than zero.

In some possible implementations, a manner of obtaining the paging search space for transmitting the paging DCI is: receiving configuration information sent by the network device, where the configuration information indicates the paging search space for transmitting the paging DCI.

In some possible implementations, at least M monitoring occasions for monitoring the paging DCI are provided between the first moment t1 and the second moment t2, where M is the quantity of SSBs actually sent by the network device, so as to ensure that the user equipment can cover each SSB beam actually sent by the network device in a set time period for monitoring the paging DCI.

In some possible implementations, the interval between the first moment t1 and the second moment t2 is greater than or equal to a duration of a paging search space period, where the paging search space period is a period corresponding to the paging search space for transmitting the paging DCI, so as to ensure that the user equipment can cover each SSB beam actually sent by the network device in a set time period for monitoring the paging DCI.

In some possible implementations, the monitoring occasion for monitoring the paging DCI includes at least one monitoring occasion in S paging search space periods after the first moment, where S is an integer greater than or equal to 1.

In some possible implementations, the monitoring occasion for monitoring the paging DCI includes at least one monitoring occasion in S paging search space periods before the second moment, where S is an integer greater than or equal to 1.

In an example, the value of S may be determined according to a protocol agreement.

In some possible implementations, as shown in FIG. 3, the method further includes step S204, in which the user equipment reports capability information to the network device, where the capability information is used to indicate at least one of the first time interval T1 or the second time interval T2.

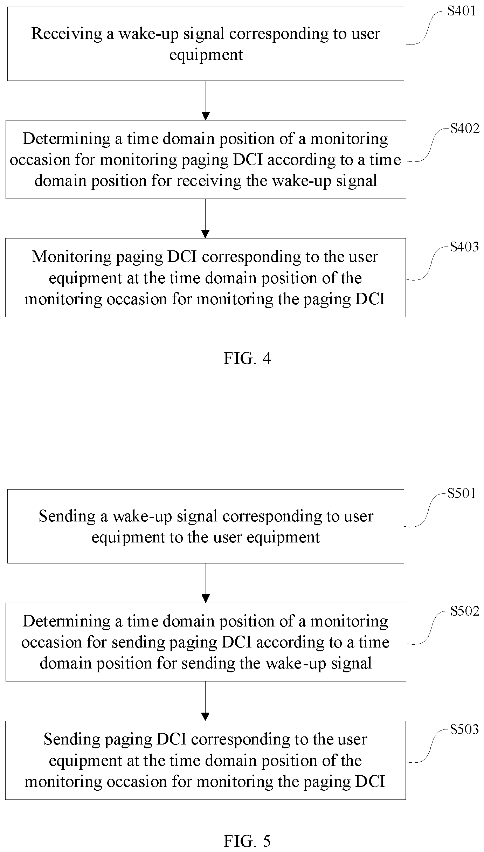

According to an embodiment of the present disclosure, there is provided a method for monitoring paging downlink control information, performed by the user equipment 102. FIG. 4 is a flowchart of a method for monitoring paging downlink control information according to an example embodiment. As shown in FIG. 4, the method includes following steps.

In step S401, a wake-up signal corresponding to the user equipment is received.

In step S402, a time domain position of a monitoring occasion for monitoring the paging DCI is determined according to a time domain position for receiving the wake-up signal.

In step S403, the paging DCI corresponding to the user equipment is monitored at the time domain position of the monitoring occasion for monitoring the paging DCI.

In some possible implementations, the monitoring occasion of the wake-up signal corresponding to the user equipment is periodically distributed in the time domain, so that the network device periodically sends the monitoring occasion of the corresponding wake-up signal.

In some possible implementations, the time domain position of the monitoring occasion for monitoring the paging DCI is after the first moment t1, the first moment t1 is a moment corresponding to the first time interval T1 behind the end position of the time domain position for receiving the wake-up signal.

Alternatively, the time domain position of the monitoring occasion for monitoring the paging DCI is after the third moment t3, and the third moment t3 is a moment corresponding to the first time interval T1 behind the start position of the time domain position for receiving the wake-up signal. Among them, the duration of the interval between the third moment t3 and the first moment t1 is the length of the monitoring occasion of the wake-up signal corresponding to the user equipment.

Among them, the first time interval T1 is determined by a protocol, or the first time interval T1 may be determined according to a protocol agreement.

By setting the first time interval T1, a processing time is reserved for the user equipment to switch from receiving the wake-up signal to receiving the paging DCI.

In some possible implementations, the time domain position of the monitoring occasion for monitoring the paging DCI is before the second moment t2. The second moment t2 is a moment corresponding to the second time interval T2 behind the end position of the time domain position for receiving the wake-up signal.

Alternatively, the time domain position of the monitoring occasion for monitoring the paging DCI is before a fourth moment t4. The fourth moment t4 is a moment corresponding to the second time interval T2 behind the start position of the time domain position for receiving the wake-up signal. Among them, the duration of the interval between the fourth moment t4 and the second moment t2 is the length of the monitoring occasion of the wake-up signal corresponding to the user equipment.

Among them, the second time interval T2 is determined by a protocol, or the second time interval T2 may be determined according to a protocol agreement.

By setting the second time interval T2, the user equipment is prevented from monitoring for a long time when the monitoring occasion for monitoring the paging DCI is not detected, so as to save the power consumption of the user equipment.

In some possible implementations, the time domain position of the monitoring occasion for monitoring the paging DCI is after the first moment t1 and before the second moment t2. The first moment t1 is a moment corresponding to the first time interval T1 behind the end position of the time domain position for receiving the wake-up signal, and the second moment t2 is a moment corresponding to the second time interval T2 behind the end position of the time domain position for receiving the wake-up signal.

By setting the first time interval T1 and the second time interval T2, a processing time may be reserved for the user equipment to switch from receiving the wake-up signal to receiving the paging DCI. In addition, the user equipment may be prevented from monitoring for a long time when the monitoring occasion for monitoring the paging DCI is not detected, so as to save the power consumption of the user equipment.

In some possible implementations, the monitoring occasion for monitoring the paging DCI satisfies one of the following manners.

In manner 1, the monitoring occasion for monitoring the paging DCI at least includes M * H monitoring occasions after the first moment and closest to the first moment in the paging search space for transmitting the paging DCI, where M is the quantity of SSBs actually sent by the network device, and H is an integer greater than zero.

In an example, the monitoring occasion for monitoring the paging DCI only includes M * H monitoring occasions after the first moment and closest to the first moment in the paging search space for transmitting the paging DCI, so as to ensure that the operation of starting to monitor the paging DCI is later than the first moment.

In manner 2, the monitoring occasion for monitoring the paging DCI at least includes M * H monitoring occasions in one or more paging search space periods after the first moment and closest to the first moment in the paging search space for transmitting the paging DCI, where the start time of the paging search space period is later than the first moment, M is the quantity of SSBs actually sent by the network device, and H is an integer greater than zero. Among them, the paging search space period is a period corresponding to the paging search space for transmitting the paging DCI.

In an example, when M * N monitoring occasions are included in a period of the paging search space, N is an integer greater than zero, and the value of H is the same as the value of N.

In an example, the monitoring occasion for monitoring the paging DCI only includes M * H monitoring occasions in a paging search space period after the first moment and closest to the first moment in the paging search space for transmitting the paging DCI, so as to ensure that the operation of starting to monitor the paging DCI is later than the first moment.

In manner 3, the monitoring occasion for monitoring the paging DCI at least includes all paging occasions in a paging search space period after the first moment and closest to the first moment in the paging search space for transmitting the paging DCI, and the start time of the paging search space period is later than the first moment.

In some possible implementations, the monitoring occasion for monitoring the paging DCI satisfies one of the following manners.

In manner 1, the monitoring occasion for monitoring the paging DCI at least includes M * H monitoring occasions before the second moment and closest to the second moment in the paging search space for transmitting the paging DCI, where M is the quantity of SSBs actually sent by the network device, and H is an integer greater than zero.

In an example, the monitoring occasion for monitoring the paging DCI only includes M * H monitoring occasions before the second moment and closest to the second moment in the paging search space for transmitting the paging DCI.

In manner 2, the monitoring occasion for monitoring the paging DCI at least includes M * H monitoring occasions in one or more paging search space periods before the second moment and closest to the second moment in the paging search space for transmitting the paging DCI, where the end time of the paging search space period is earlier than the second moment, M is the quantity of SSBs actually sent by the network device, and H is an integer greater than zero. Among them, the paging search space period is a period corresponding to the paging search space for transmitting the paging DCI.

In an example, when M * N monitoring occasions are included in a period of the paging search space, N is an integer greater than zero, and the value of H is the same as the value of N.

In an example, the monitoring occasion for monitoring the paging DCI only includes M * H monitoring occasions in a paging search space period before the second moment and closest to the second moment in the paging search space for transmitting the paging DCI.

In manner 3, the monitoring occasion for monitoring the paging DCI at least includes all paging occasions in a paging search space period before the second moment and closest to the second moment in the paging search space for transmitting the paging DCI, and the end time of the paging search space period is later than the second moment.

In an example, the monitoring occasion for monitoring the paging DCI only includes all paging occasions in a paging search space period before the second moment and closest to the second moment in the paging search space for transmitting the paging DCI, and the start time of the paging search space period is later than the second moment.

In an example, the monitoring occasion for monitoring the paging DCI only includes all paging occasions in a paging search space period after the first moment and closest to the first moment in the paging search space for transmitting the paging DCI.

In some possible implementations, a period of the paging search space for transmitting the paging DCI includes M * N monitoring occasions, where M is the quantity of SSBs actually sent by the network device, and N is an integer greater than zero.

In some possible implementations, a manner of obtaining the paging search space for transmitting the paging DCI is: receiving configuration information sent by the network device, where the configuration information indicates the paging search space for transmitting the paging DCI.

In some possible implementations, at least M monitoring occasions for monitoring the paging DCI are provided between the first moment t1 and the second moment t2, where M is the quantity of SSBs actually sent by the network device, so as to ensure that the user equipment can cover each SSB beam actually sent by the network device in a set time period for monitoring the paging DCI.

In some possible implementations, the interval between the first moment t1 and the second moment t2 is greater than or equal to the duration of a paging search space period, where the paging search space period is a period corresponding to the paging search space for transmitting the paging DCI, so as to ensure that the user equipment can cover each SSB beam actually sent by the network device in a set time period for monitoring the paging DCI.

In some possible implementations, the monitoring occasion for monitoring the paging DCI includes at least one monitoring occasion in S paging search space periods after the first moment, where S is an integer greater than or equal to 1.

In some possible implementations, the monitoring occasion for monitoring the paging DCI includes at least one monitoring occasion in S paging search space periods before the second moment, where S is an integer greater than or equal to 1.

In an example, the value of S may be determined according to a protocol agreement.

In some possible implementations, the user equipment reports capability information to the network device, where the capability information is used to indicate at least one of the first time interval T1 or the second time interval T2, so that the network device sends the paging DCI based on the obtained first time interval T1 and/or the second time interval T2.

In the embodiments of the present disclosure, the time domain position of the monitoring occasion for monitoring the paging DCI is determined according to the time domain position for receiving the wake-up signal. In a case that the paging DCI is not periodically sent due to use of the wake-up signal, the time domain position of the monitoring occasion for monitoring the paging DCI may be accurately determined, and the paging DCI may be received in time.

According to an embodiment of the present disclosure, there is provided a method for sending paging downlink control information, performed by the network device 101. FIG. 5 is a flowchart of a method for sending paging downlink control information according to an example embodiment. As shown in FIG. 5, the method includes following steps.

In step S501, a wake-up signal corresponding to a user equipment is sent to the user equipment.

In step S502, a time domain position of a monitoring occasion for sending paging DCI is determined according to a time domain position for sending the wake-up signal;
In step S503, the paging DCI corresponding to the user equipment is sent at the time domain position of the monitoring occasion for monitoring the paging DCI.

In some possible implementations, the monitoring occasion of the wake-up signal corresponding to the user equipment is periodically distributed in the time domain, so that the network device may periodically send the monitoring occasion of the corresponding wake-up signal.

In some possible implementations, the time domain position of the monitoring occasion for monitoring the paging DCI is after the first moment, and the first moment is a moment corresponding to a first time interval behind the end position of the time domain position for sending the wake-up signal.

In some possible implementations, the time domain position of the monitoring occasion for monitoring the paging DCI is after the first moment t1, and the first moment t1 is a moment corresponding to the first time interval T 1 behind the end position of the time domain position for receiving the wake-up signal.

Alternatively, the time domain position of the monitoring occasion for monitoring the paging DCI is after the third moment t3, and the third moment t3 is a moment corresponding to the first time interval T1 behind the start position of the time domain position for receiving the wake-up signal. Among them, the duration of the interval between the third moment t3 and the first moment t1 is the length of the monitoring occasion of the wake-up signal corresponding to the user equipment.

Among them, the first time interval T1 is determined by a protocol, or the first time interval T1 may be determined according to a protocol agreement.

By setting the first time interval T1, a processing time is reserved for the user equipment to switch from receiving the wake-up signal to receiving the paging DCI.

In some possible implementations, the time domain position of the monitoring occasion for monitoring the paging DCI is before the second moment t2. The second moment t2 is a moment corresponding to the second time interval T2 behind the end position of the time domain position for receiving the wake-up signal.

Alternatively, the time domain position of the monitoring occasion for monitoring the paging DCI is before a fourth moment t4. The fourth moment t4 is a moment corresponding to the second time interval T2 behind the start position of the time domain position for receiving the wake-up signal. Among them, the duration of the interval between the fourth moment t4 and the second moment t2 is the length of the monitoring occasion of the wake-up signal corresponding to the user equipment.

Among them, the second time interval T2 is determined by a protocol, or the second time interval T2 may be determined according to a protocol agreement.

By setting the second time interval T2, the user equipment is prevented from monitoring for a long time when the monitoring occasion for monitoring the paging DCI is not detected, so as to save the power consumption of the user equipment.

In some possible implementations, the time domain position of the monitoring occasion for monitoring the paging DCI is after the first moment t1 and before the second moment t2. The first moment t1 is a moment corresponding to the first time interval T1 behind the end position of the time domain position for receiving the wake-up signal, and the second moment t2 is a moment corresponding to the second time interval T2 behind the end position of the time domain position for receiving the wake-up signal.

By setting the first time interval T1 and the second time interval T2, a processing time may be reserved for the user equipment to switch from receiving the wake-up signal to receiving the paging DCI. In addition, the user equipment may be prevented from monitoring for a long time when the monitoring occasion for monitoring the paging DCI is not detected, so as to save the power consumption of the user equipment.

In some possible implementations, the monitoring occasion for monitoring the paging DCI at least includes M * H monitoring occasions after the first moment and closest to the first moment in the paging search space for transmitting the paging DCI, where H is an integer greater than zero.

In some possible implementations, the monitoring occasion for monitoring the paging DCI at least includes M * H monitoring occasions in one or more paging search space periods after the first moment and closest to the first moment in the paging search space for transmitting the paging DCI, where the start time of the paging search space period is later than the first moment, M is the quantity of SSBs actually sent by the network device, and H is an integer greater than zero. The paging search space period is a period corresponding to the paging search space.

In an example, in response to M * N monitoring occasions being included in a period of the paging search space for transmitting the paging DCI, H is N.

In some possible implementations, the monitoring occasion for monitoring the paging DCI at least includes all paging occasions in a paging search space period after the first moment and closest to the first moment in the paging search space for transmitting the paging DCI, and the start time of the paging search space period is later than the first moment.

In some possible implementations, a manner of notifying the user equipment of the paging search space is: sending configuration information to the user equipment, where the configuration information indicates the paging search space for transmitting the paging DCI.

In some possible implementations, at least M monitoring occasions for monitoring the paging DCI are provided between the first moment and the second moment, where M is the quantity of SSBs actually sent by the network device.

In some possible implementations, the interval between the first moment and the second moment is greater than or equal to the duration of a paging search space period, where the paging search space period is a period corresponding to the paging search space for transmitting the paging DCI.

In some possible implementations, the monitoring occasion for monitoring the paging DCI includes at least one monitoring occasion in S paging search space periods after the first moment, where S is an integer greater than or equal to 1, and the paging search space period is a period corresponding to the paging search space for transmitting the paging DCI.

In some possible implementations, the monitoring occasion for monitoring the paging DCI includes at least one monitoring occasion in S paging search space periods before the second moment, where S is an integer greater than or equal to 1, and the paging search space period is a period corresponding to the paging search space for transmitting the paging DCI.

In some possible implementations, capability information reported by the user equipment is received, where the capability information is used to indicate at least one of the first time interval or the second time interval.

Based on the same concept as the foregoing method embodiments, according to an embodiment of the present disclosure, there is further provided a communication apparatus. The communication apparatus may have the functions of the user equipment 102 in the foregoing method embodiments, and is configured to perform the steps performed by the user equipment 102 provided in the foregoing embodiments. The function may be implemented by hardware, or by software, or by hardware executing corresponding software. The hardware or the software includes one or more modules corresponding to the foregoing functions.

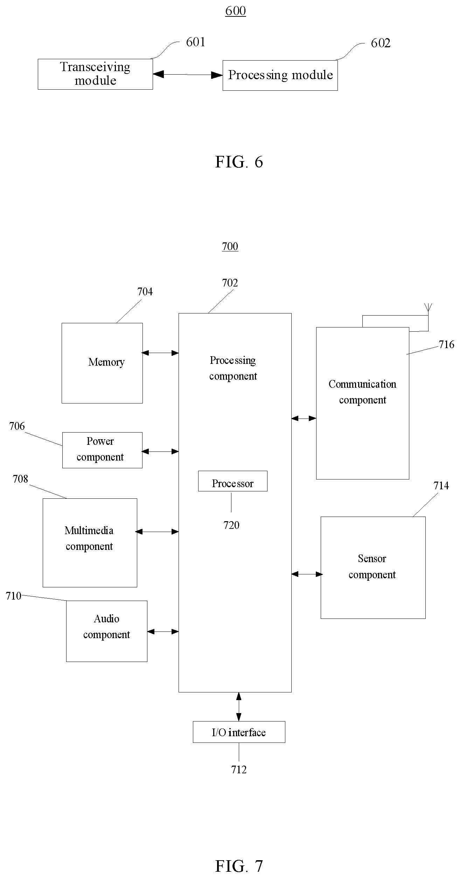

In a possible implementation, the communication apparatus 600 shown in FIG. 6 may be used as the user equipment 102 in the foregoing method embodiments, and perform the steps performed by the user equipment 102 in the foregoing method embodiments.

The communication apparatus 600 includes a transceiving module 601 and a processing module 602.

The transceiving module 601 is configured to receive a wake-up signal corresponding to the user equipment.

The processing module 602 is configured to determine a time domain position of a monitoring occasion for monitoring the paging DCI according to a time domain position for receiving the wake-up signal.

The transceiving module 601 is further configured to monitor the paging DCI corresponding to the user equipment at the time domain position of the monitoring occasion for monitoring the paging DCI.

In some possible implementations, a monitoring occasion of the wake-up signal corresponding to the user equipment is periodically distributed in the time domain.

In some possible implementations, the time domain position of the monitoring occasion for monitoring the paging DCI is after a first moment, and the first moment is a moment corresponding to a first time interval behind an end position of the time domain position for receiving the wake-up signal.

In some possible implementations, the time domain position of the monitoring occasion for monitoring the paging DCI is before a second moment, and the second moment is a moment corresponding to a second time interval behind an end position of the time domain position for receiving the wake-up signal.

In some possible implementations, a period of a paging search space for transmitting the paging DCI includes M * N monitoring occasions, where M is a quantity of SSBs actually sent by a network device, and N is an integer greater than zero.

In some possible implementations, the monitoring occasion for monitoring the paging DCI at least includes M * H monitoring occasions after the first moment and closest to the first moment in a paging search space for transmitting the paging DCI, where M is a quantity of SSBs actually sent by a network device, and H is an integer greater than zero.

In some possible implementations, the monitoring occasion for monitoring the paging DCI at least includes M * H monitoring occasions in one or more paging search space periods after the first moment and closest to the first moment in a paging search space for transmitting the paging DCI, where a start time of the paging search space period is later than the first moment, M is a quantity of SSBs actually sent by a network device, H is an integer greater than zero, and the paging search space period is a period corresponding to a paging search space for transmitting paging DCI.

In some possible implementations, in response to a period of a paging search space including M * N monitoring occasions, His N.

In some possible implementations, the monitoring occasion for monitoring the paging DCI at least includes all paging occasions in a paging search space period after the first moment and closest to the first moment in a paging search space for transmitting the paging DCI, where a start time of the paging search space period is later than the first moment, and the paging search space period is a period corresponding to the paging search space.

In some possible implementations, the transceiving module 601 is further configured to receive configuration information sent by a network device, where the configuration information indicates a paging search space for transmitting the paging DCI.

In some possible implementations, at least M monitoring occasions for monitoring the paging DCI are provided between the first moment and the second moment, where M is a quantity of SSBs actually sent by a network device.

In some possible implementations, an interval between the first moment and the second moment is greater than or equal to a duration of a paging search space period, where the paging search space period is a period corresponding to a paging search space for transmitting the paging DCI.

In some possible implementations, the monitoring occasion for monitoring the paging DCI includes at least one monitoring occasion in S paging search space periods after the first moment, where S is an integer greater than or equal to 1, and the paging search space period is a period corresponding to a paging search space for transmitting the paging DCI.

In some possible implementations, the monitoring occasion for monitoring the paging DCI includes at least one monitoring occasion in S paging search space periods before the second moment, where S is an integer greater than or equal to 1, and the paging search space period is a period corresponding to a paging search space for transmitting the paging DCI.

In some possible implementations, the transceiving module 601 is further configured to report capability information to a network device, where the capability information is used to indicate at least one of the first time interval or the second time interval.

When the communication apparatus is the user equipment 102, the structure of the communication apparatus may also be as shown in FIG. 7.

FIG. 7 is a block diagram of an apparatus 700 for transmitting paging downlink control information according to an example embodiment. For example, the apparatus 700 may be a mobile phone, a computer, a digital broadcast terminal, a message transceiving device, a game console, a tablet device, a medical device, a fitness device, a personal digital assistant, or the like.

Referring to FIG. 7, the apparatus 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the apparatus 700, such as operations associated with display, telephone calls, data communications, camera operations, and recording operations. The processing component 702 may include one or more processors 720 to execute instructions to perform all or part of the steps of the above method. In addition, the processing component 702 may include one or more modules to facilitate interaction between the processing component 702 and other components. For example, the processing component 702 may include a multimedia module to facilitate interaction between the multimedia component 708 and the processing component 702.

The memory 704 is configured to store various types of data to support the operations of the apparatus 700. Examples of such data include instructions for any application or method operated on the apparatus 700, contact data, phonebook data, messages, pictures, videos, etc. The memory 704 may be implemented by any type of volatile or non-volatile storage device or a combination of them, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 706 provides power to various components of the apparatus 700. The power component 706 may include a power management system, one or more power sources, and other components associated with generating, managing, and distributing power for the apparatus 700.

The multimedia component 708 includes a screen providing an output interface between the apparatus 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touching, sliding, and gestures on the touch panel. The touch sensor may not only sense a boundary of a touching or sliding action, but also detect a duration and pressure associated with the touching or sliding action. In some embodiments, the multimedia component 708 includes a front camera and/or a rear camera. The front camera and/or the rear camera may receive external multimedia data when the apparatus 700 is in an operation mode, such as a photographing mode or a video mode. Each of the front camera and the rear camera may be a fixed optical lens system or have a focal length and optical zoom capability.

The audio component 710 is configured to output and/or input audio signals. For example, the audio component 710 includes a microphone (MIC) configured to receive an external audio signal when the apparatus 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and a peripheral interface module, and the peripheral interface module may be a keyboard, a click wheel, a button, or the like. The button may include, but are not limited to, a home button, a volume button, a starting button, and a locking button.

The sensor component 714 includes one or more sensors to provide status assessments of various aspects of the apparatus 700. For example, the sensor component 714 may detect the on/off state of the apparatus 700, and the relative positioning of the components, such as the display and keypad of the apparatus 700. The sensor component 714 may also detect the position change of the apparatus 700 or one component of the apparatus 700, the presence or absence of contact by the user with the apparatus 700, the orientation or acceleration/deceleration of the apparatus 700, and the temperature change of the apparatus 700. The sensor component 714 may include a proximity sensor configured to detect the presence of nearby objects without any physical contact. The sensor component 714 may also include an optical sensor, such as a CMOS or CCD image sensor, for use in imaging applications. In some embodiments, the sensor component 714 may further include an acceleration sensor, a gyroscope sensor, a magnetic sensor, a pressure sensor, or a temperature sensor.

The communication component 716 is configured to facilitate wired or wireless communication between the apparatus 700 and other devices. The apparatus 700 may access a wireless network based on a communication standard, such as WiFi, 4G or 5G, or a combination of them. In an example embodiment, the communication component 716 receives a broadcast signal or broadcast associated information from an external broadcast management system via a broadcast channel. In an example embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an example embodiment, the apparatus 700 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components for performing the methods described above.

In an example embodiment, there is further provided a non-transitory computer-readable storage medium including an instruction, for example, the memory 704 including an instruction. The instruction may be executed by the processor 720 of the apparatus 700 to perform and complete the foregoing method. For example, the non-transitory computer-readable storage medium may be a ROM, a random access memory (RAM), a CD-ROM, a magnetic tape, a floppy disk, an optical data storage device, or the like.

Based on the same concept as the foregoing method embodiments, according to an embodiment of the present disclosure, there is further provided a communication apparatus. The communication apparatus may have functions of the network device 101 in the foregoing method embodiments, and is configured to perform the steps performed by the network device 101 provided in the foregoing embodiments. The function may be implemented by hardware, or by software, or by hardware executing corresponding software. The hardware or the software includes one or more modules corresponding to the foregoing functions.

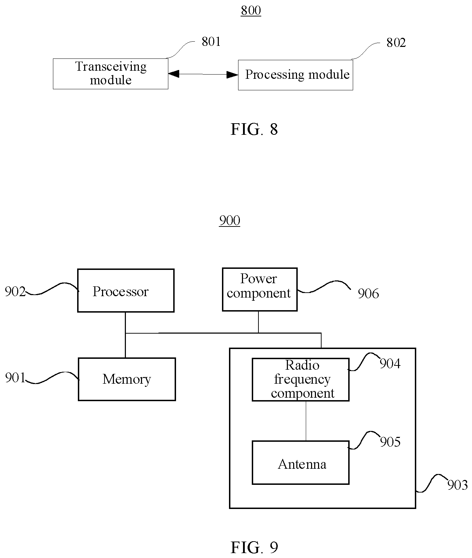

In a possible implementation, the communication apparatus 800 shown in FIG. 8 may be used as the network device 101 in the foregoing method embodiments, and perform the steps performed by the network device 101 in the foregoing method embodiments.

The communication apparatus 800 shown in FIG. 8 includes a transceiving module 801 and a processing module 802.

The transceiving module 801 is configured to send a wake-up signal corresponding to a user equipment to the user equipment.

The processing module 802 is configured to determine a time domain position of a monitoring occasion for sending the paging DCI according to a time domain position for sending the wake-up signal.

The transceiving module 801 is configured to send the paging DCI corresponding to the user equipment at the time domain position of the monitoring occasion for monitoring the paging DCI.

In some possible implementations, a monitoring occasion of a wake-up signal corresponding to the user equipment is periodically distributed in a time domain.

In some possible implementations, the time domain position of the monitoring occasion for monitoring the paging DCI is after a first moment, and the first moment is a moment corresponding to a first time interval behind an end position of the time domain position for sending the wake-up signal.

In some possible implementations, the time domain position of the monitoring occasion for monitoring the paging DCI is before a second moment, and the second moment is a moment corresponding to a second time interval behind an end position of the time domain position for receiving the wake-up signal.

In some possible implementations, a period of a paging search space for transmitting the paging DCI includes M * N monitoring occasions, where M is a quantity of SSBs actually sent by the network device, and N is an integer greater than zero.

In some possible implementations, the monitoring occasion for monitoring the paging DCI at least includes M * H monitoring occasions after the first moment and closest to the first moment in a paging search space for transmitting the paging DCI, where H is an integer greater than zero.

In some possible implementations, the monitoring occasion for monitoring the paging DCI at least includes M * H monitoring occasions in one or more paging search space periods after the first moment and closest to the first moment in a paging search space for transmitting the paging DCI, where a start time of the paging search space period is later than the first moment, M is a quantity of SSBs actually sent by the network device, H is an integer greater than zero, and the paging search space period is a period corresponding to the paging search space.

In some possible implementations, in response to a period of a paging search space for transmitting the paging DCI includes M * N monitoring occasions, H is N.

In some possible implementations, the monitoring occasion for monitoring the paging DCI at least includes all paging occasions in a paging search space period after the first moment and closest to the first moment in a paging search space for transmitting the paging DCI, and a start time of the paging search space period is later than the first moment.

In some possible implementations, the transceiving module 801 is further configured to send configuration information to the user equipment, where the configuration information indicates a paging search space for transmitting the paging DCI.

In some possible implementations, at least M monitoring occasions for monitoring the paging DCI are provided between the first moment and the second moment, where M is a quantity of SSBs actually sent by the network device.

In some possible implementations, an interval between the first moment and the second moment is greater than or equal to a duration of a paging search space period, where the paging search space period is a period corresponding to a paging search space for transmitting the paging DCI.

In some possible implementations, the monitoring occasion for monitoring the paging DCI includes at least one monitoring occasion in S paging search space periods after the first moment, where S is an integer greater than or equal to 1, and the paging search space period is a period corresponding to a paging search space for transmitting the paging DCI.

In some possible implementations, the monitoring occasion for monitoring the paging DCI includes at least one monitoring occasion in S paging search space periods before the second moment, where S is an integer greater than or equal to 1, and the paging search space period is a period corresponding to a paging search space for transmitting the paging DCI.

In some possible implementations, the transceiving module 801 is further configured to receive capability information reported by the user equipment, where the capability information is used to indicate at least one of the first time interval or the second time interval.

When the communication apparatus is the network device 101, the structure of the communication apparatus may also be as shown in FIG. 9. As shown in FIG. 9, the apparatus 900 includes a memory 901, a processor 902, a transceiving component 903, and a power component 906; where the memory 901 is coupled to the processor 902, and may be configured to store a program and data necessary for implementing each function by the communication apparatus 900. The processor 902 is configured to support the communication apparatus 900 in performing corresponding functions in the foregoing methods, and such functions may be implemented by invoking a program stored in the memory 901. The transceiving component 903 may be a wireless transceiver, and may be configured to support the communication apparatus 900 in receiving signaling and/or data and sending signaling and/or data through a wireless air interface. The transceiving component 903 may also be referred to as a transceiving unit or a communication unit. The transceiving component 903 may include a radio frequency component 904 and one or more antennas 905, where the radio frequency component 904 may be a remote radio unit (RRU), and may be specifically configured for transmission of radio frequency signals and conversion between a radio frequency signal and a baseband signal. The one or more antennas 905 may be specifically configured to radiate and receive radio frequency signals.

When the communication apparatus 900 needs to send data, the processor 902 may perform baseband processing on the data to be sent, and then output a baseband signal to the radio frequency unit. The radio frequency unit performs radio frequency processing on the baseband signal and then sends the radio frequency signal in the form of an electromagnetic wave through the antenna. When data is sent to the communication apparatus 900, the radio frequency unit receives the radio frequency signal through the antenna, converts the radio frequency signal into a baseband signal, and outputs the baseband signal to the processor 902. The processor 902 converts the baseband signal into data, and performs processing on the data.

Other embodiments of the embodiments of the present disclosure will be apparent to those skilled in the art from consideration of the specification and practice of the invention disclosed here. The present application is intended to cover any variations, uses, or adaptations of the present disclosure following the general principles of the present disclosure and including common general knowledge and conventional technical means in the art not disclosed in the present disclosure. It is intended that the specification and embodiments are considered as examples only, with a true scope and spirit of the embodiments of the present disclosure being indicated by the following claims.

It should be understood that the embodiments of the present disclosure are not limited to the precise structures that have been described above and shown in the accompanying drawings, and various modifications and changes may be made without departing from the scope of the present disclosure. The scope of the embodiments of the present disclosure is limited only by the appended claims.

### Industrial Applicability

The user equipment determines the time domain position of the monitoring occasion for monitoring the paging DCI according to the time domain position for receiving the wake-up signal. In a case that the paging DCI is not periodically sent due to use of the wake-up signal, the user equipment may accurately determine the time domain position of the monitoring occasion for monitoring the paging DCI, and receive the paging DCI in time.

## Claims

1. A method for monitoring paging downlink control information, performed by a user equipment, and comprising:
receiving a wake-up signal corresponding to the user equipment;
determining a time domain position of a monitoring occasion for monitoring paging DCI according to a time domain position for receiving the wake-up signal; and
monitoring paging DCI corresponding to the user equipment at the time domain position of the monitoring occasion for monitoring the paging DCI.

2. The method according to claim 1, wherein,
a monitoring occasion of the wake-up signal corresponding to the user equipment is periodically distributed in a time domain.

3. The method according to claim 1, wherein,
the time domain position of the monitoring occasion for monitoring the paging DCI is after a first moment, and the first moment is a moment corresponding to a first time interval behind an end position of the time domain position for receiving the wake-up signal.

4. The method according to claim 1 or 3, wherein,
the time domain position of the monitoring occasion for monitoring the paging DCI is before a second moment, and the second moment is a moment corresponding to a second time interval behind an end position of the time domain position for receiving the wake-up signal.

5. The method according to claim 3, wherein,
a period of a paging search space for transmitting the paging DCI comprises M * N monitoring occasions, wherein M is a quantity of SSBs actually sent by a network device, and N is an integer greater than zero.

6. The method according to claim 3 or 5, wherein,
the monitoring occasion for monitoring the paging DCI at least comprises M * H monitoring occasions after the first moment and closest to the first moment in a paging search space for transmitting the paging DCI, wherein M is a quantity of SSBs actually sent by a network device, and H is an integer greater than zero.

7. The method according to claim 3, wherein,
the monitoring occasion for monitoring the paging DCI at least comprises M * H monitoring occasions in one or more paging search space periods after the first moment and closest to the first moment in a paging search space for transmitting the paging DCI, a start time of the paging search space period is later than the first moment, M is a quantity of SSBs actually sent by a network device, and H is an integer greater than zero.

8. The method according to claim 6 or 7, wherein,
in response to a period of a paging search space comprising M * N monitoring occasions, HisN.

9. The method according to claim 3, wherein,
the monitoring occasion for monitoring the paging DCI at least comprises all paging occasions in a paging search space period after the first moment and closest to the first moment in a paging search space for transmitting the paging DCI, and a start time of the paging search space period is later than the first moment.

10. The method according to any one of claims 5 to 9, wherein,
receiving configuration information sent by the network device, wherein the configuration information indicates a paging search space for transmitting the paging DCI.

11. The method according to claim 4, wherein,
at least M monitoring occasions for monitoring the paging DCI are provided between the first moment and the second moment, wherein M is a quantity of SSBs actually sent by a network device.

12. The method according to claim 4, wherein,
an interval between the first moment and the second moment is greater than or equal to a duration of a paging search space period.

13. The method according to claim 3 or 4, wherein,
the monitoring occasion for monitoring the paging DCI comprises at least one monitoring occasion in S paging search space periods after the first moment, wherein S is an integer greater than or equal to 1.

14. The method according to claim 4, wherein,
the monitoring occasion for monitoring the paging DCI comprises at least one monitoring occasion in S paging search space periods before the second moment, wherein S is an integer greater than or equal to 1.

15. The method according to claim 4, wherein the method further comprises:
reporting capability information to a network device, wherein the capability information is used to indicate at least one of the first time interval or the second time interval.

16. A method for sending paging downlink control information, performed by a network device, and comprising:
sending a wake-up signal corresponding to a user equipment to the user equipment;
determining a time domain position of a monitoring occasion for sending paging DCI according to a time domain position for sending the wake-up signal; and
sending paging DCI corresponding to the user equipment at the time domain position of the monitoring occasion for monitoring the paging DCI.

17. The method according to claim 16, wherein,
a monitoring occasion of the wake-up signal corresponding to the user equipment is periodically distributed in a time domain.

18. The method according to claim 16, wherein,
the time domain position of the monitoring occasion for monitoring the paging DCI is after a first moment, and the first moment is a moment corresponding to a first time interval behind an end position of the time domain position for sending the wake-up signal.

19. The method according to claim 16 or 18, wherein,
the time domain position of the monitoring occasion for monitoring the paging DCI is before a second moment, and the second moment is a moment corresponding to a second time interval behind an end position of the time domain position for receiving the wake-up signal.

20. The method according to claim 16, wherein,
a period of a paging search space for transmitting the paging DCI comprises M * N monitoring occasions, wherein M is a quantity of SSBs actually sent by the network device, and N is an integer greater than zero.

21. The method according to claim 18, wherein,
the monitoring occasion for monitoring the paging DCI at least comprises M * H monitoring occasions after the first moment and closest to the first moment in a paging search space for transmitting the paging DCI, wherein H is an integer greater than zero.

22. The method according to claim 18, wherein,
the monitoring occasion for monitoring the paging DCI at least comprises M * H monitoring occasions in one or more paging search space periods after the first moment and closest to the first moment in a paging search space for transmitting the paging DCI, a start time of the paging search space period is later than the first moment, M is a quantity of SSBs actually sent by the network device, and H is an integer greater than zero.

23. The method according to claim 21 or 22, wherein,
in response to a period of a paging search space for transmitting the paging DCI comprises M * N monitoring occasions, H is N.

24. The method according to claim 18, wherein,
the monitoring occasion for monitoring the paging DCI at least comprises all paging occasions in a paging search space period after the first moment and closest to the first moment in a paging search space for transmitting the paging DCI, and a start time of the paging search space period is later than the first moment.

25. The method according to any one of claims 20 to 24, wherein,
sending configuration information to the user equipment, wherein the configuration information indicates a paging search space for transmitting the paging DCI.

26. The method according to claim 19, wherein,
at least M monitoring occasions for monitoring the paging DCI are provided between the first moment and the second moment, wherein M is a quantity of SSBs actually sent by the network device.

27. The method according to claim 19, wherein,
an interval between the first moment and the second moment is greater than or equal to a duration of a paging search space period.

28. The method according to claim 18, wherein,
the monitoring occasion for monitoring the paging DCI comprises at least one monitoring occasion in S paging search space periods after the first moment, wherein S is an integer greater than or equal to 1.

29. The method according to claim 18 or 19, wherein,
the monitoring occasion for monitoring the paging DCI comprises at least one monitoring occasion in S paging search space periods before the second moment, wherein S is an integer greater than or equal to 1.

30. The method according to claim 19, wherein the method further comprises:
receiving capability information reported by the user equipment, wherein the capability information is used to indicate at least one of the first time interval and the second time interval.

31. A communication apparatus, configured in a user equipment, and comprising:
a transceiving module, configured to receive a wake-up signal corresponding to the user equipment; and
a processing module, configured to determine a time domain position of a monitoring occasion for monitoring paging DCI according to a time domain position for receiving the wake-up signal;
wherein the transceiving module is further configured to monitor paging DCI corresponding to the user equipment at the time domain position of the monitoring occasion for monitoring the paging DCI.

32. A communication apparatus, configured in a network device, wherein,
a transceiving module, configured to send a wake-up signal corresponding to a user equipment to the user equipment; and
a processing module, configured to determine a time domain position of a monitoring occasion for sending paging DCI according to a time domain position for sending the wake-up signal;
wherein the transceiving module is further configured to send paging DCI corresponding to the user equipment at the time domain position of the monitoring occasion for monitoring the paging DCI.

33. A communication apparatus, comprising a processor and a memory, wherein,
the memory is configured to store a computer program; and
the processor is configured to execute the computer program to implement the method according to any one of claims 1 to 15.

34. A communication apparatus, comprising a processor and a memory, wherein,
the memory is configured to store a computer program; and
the processor is configured to execute the computer program to implement the method according to any one of claims 16 to 30.

35. A computer-readable storage medium, storing an instruction that, when invoked and executed on a computer, enables the computer to execute the method according to any one of claims 1 to 15.

36. A computer-readable storage medium, storing an instruction that, when invoked and executed on a computer, enables the computer to execute the method according to any one of claims 16 to 30.
